Europäisches Patentamt

European Patent Office

Office européen des brevets

(19)

(11) Veröffentlichungsnummer: **0 299 294 B1**

# EUROPÄISCHE PATENTSCHRIFT

(12)

(45) Veröffentlichungstag der Patentschrift: **27.05.92**

(51) Int. Cl.⁵: **B01D 53/36**, B01J 29/04

(21) Anmeldenummer: **88110521.7**

(22) Anmeldetag: **01.07.88**

(54) **Verfahren zur Entfernung von Stickoxiden aus Abgasen.**

(30) Priorität: **11.07.87 DE 3723072**

(43) Veröffentlichungstag der Anmeldung:
**18.01.89 Patentblatt 89/03**

(45) Bekanntmachung des Hinweises auf die
Patenterteilung:
**27.05.92 Patentblatt 92/22**

(84) Benannte Vertragsstaaten:
**BE DE FR GB NL**

(56) Entgegenhaltungen:
**WO-A-88/02659**
**GB-A- 2 162 830**

(73) Patentinhaber: **BASF Aktiengesellschaft**
**Carl-Bosch-Strasse 38**
**W-6700 Ludwigshafen(DE)**

(72) Erfinder: **Hoelderich, Wolfgang, Dr.**
**Mannheimer Strasse 18 c**
**W-6710 Frankenthal(DE)**
Erfinder: **Scheidsteger, Olaf, Dr.**
**Rheindammstrasse 30**
**W-6800 Mannheim 1(DE)**
Erfinder: **Drews, Ronald, Dr.**
**Pranckhstrasse 22**
**W-6700 Ludwigshafen(DE)**
Erfinder: **Mross, Wolf Dieter, Dr.**
**Anselm-Feuerbach-Strasse 21**
**W-6710 Frankenthal(DE)**
Erfinder: **Hess, Klaus, Dr.**
**Sonnenwendstrasse 40**
**W-6702 Bad Duerkheim(DE)**
Erfinder: **Schachner, Helmut, Dr.**
**Zum Gruenshof 6**
**W-6909 Walldorf(DE)**

## Beschreibung

Die Erfindung betrifft die selektive katalytische Reduktion von Stickoxiden $NO_x$ aus Sauerstoff enthaltenden Abgasen mit Ammoniak unter Verwendung eines Eisensilikatzeolithen als Katalysator.

Die Abscheidung von Stickoxiden aus Abgasen z.B. von Kesselanlagen wird aus ökologischen Gründen immer dringlicher. So wurde für die katalytische Reduktion von Stickoxiden mit Ammoniak bereits viel Forschungsarbeit investiert, um wirksame und stabile Katalysatoren zu finden, die eine großindustrielle Durchführung dieses Verfahrens gestatten.

Es ist bekannt, daß Zeolithe des Mordenittypes (US-A 38 95 094), des Faujasittyps (US-A 40 52 337) und des Clinoptilolithtyps (DE-A 30 00 383) als Katalysatoren hierfür herangezogen werden.

Weiterhin ist bekannt, daß man mit Metallen dotierte Zeolithe für die Reduktion von $NO_x$ verwenden kann. In der US-A 4 473 535 ist ein mit Kupfer dotierter Mordenit, in der JP-A 79 132 472 ein mit Kupfer imprägnierter Y-Zeolith beschrieben, gemäß der JP-A 52 004 469 dienen synthetische Faujasite bzw. Mordenite als Träger für Kupfer oder Eisensulfat, Oxide des Chroms oder Vanadins. Diese Verbindungen werden durch Imprägnierung unter Bedingungen bei denen kein Ionenaustausch stattfindet, aufgebracht. In der JP-A 53 086 693 dienen Zeolithe als Träger für Verbindungen des Kupfers, Mangans und Eisens. In der US-A 3 835 068 ist die Herstellung eines Katalysators beschrieben, der für die Reduktion von $NO_x$ eingesetzt werden kann, bei dem eine gepulverte Mischung eines Zeolithen mit einem Schwermetall über den Schmelzpunkt des Zeolithen erhitzt wird, wobei dieser unter Aufschäumen dehydratisiert wird. Als Metalle können die Elemente der I. und VIII. Nebengruppe des Periodischen Systems eingesetzt werden. In der JP-A 51 144 371 werden Gemenge aus Eisenoxiden und natürlichen Zeolithen beschrieben. Schließlich werden gemäß der GB-A 2 162 830 Katalysatoren der allgemeinen Formel x $M_{2/n}$ O•y $Al_2O_3$•z $SiO_2$•m $H_2O$ beschrieben, in denen M für Wasserstoff oder Eisen steht. x, y, und z bedeuten eine Zahl und n die Wertigkeit von M. Diese Katalysatoren sollen besonders in Kombination mit einem Katalysator aus Oxiden des Ti, V, W und Mo für die Behandlung von Gasen geeignet sein, deren $NO_x$-Anteil hauptsächlich aus $NO_2$ besteht.

Diese Verfahren mit Zeolithen als Katalysatoren werden nur zur Reduktion von $NO_x$-haltigen Abgasen eingesetzt, die keine Schwefeloxide enthalten. Daher ist der Einsatz dieser Katalysatoren beschränkt auf Anlagen, deren Abgase schwefeloxidfrei sind, d.h. zum Beispiel zuvor in einer Rauchgasentschwefelungsanlage (REA) völlig gereinigt wurden. Ansonsten würde die Bildung von Metallsulfaten die Standzeit und Aktivität dieser Katalysatoren deutlich vermindern.

Weiterhin läßt die Aktivität dieser Zeolith-Katalysatoren zu wünschen übrig; zu vollständigem Umsatz der Stickoxide mit Ammoniak sind entweder nur niedrige Belastungen (SV) möglich oder es müssen hohe Temperaturen > 450°C bzw. hohe $NH_3/NO_x$-Verhältnisse > 1 gewählt werden. Das letztere hat einen unerwünschten $NH_3$-Schlupf zur Folge und führt zu Problemen von Ammoniumbisulfatbelegungen auf nachgeschalteten Anlageteilen und deren Korrosion.

Es bestand nunmehr die Aufgabe, einen hochaktiven, standzeitstabilen, selektiv wirkenden Katalysator für die selektive Reduktion von Stickoxiden mit Ammoniak bereitzustellen, bei dem die obigen Nachteile nicht auftreten und der insbesondere auch bei schwefeloxidhaltigen Abgasen eingesetzt werden kann, um dadurch höhere Flexibilität hinsichtlich des Einbaus einer Entstickungsanlage, z.B. in einem Kraftwerk, zu gewinnen.

Erfindungsgemäß wird diese Aufgabe dadurch gelöst, daß man als Katalysatoren Eisensilikatzeolithe verwendet.

Das Verfahren wird im Temperaturbereich zwischen 150 und 500°C, insbesondere 300 bis 400°C, bei Molverhältnissen $NH_3$ : $NO_x$ zwischen 0,5 und 2, insbesondere bei 0,7 bis 1,2 und bei SV von 1 000 bis 150 000 $h^{-1}$ ausgeführt. Besonderer Vorteil dieses Verfahrens ist die Tatsache, daß man die vollständige Entfernung der Stickoxide auch in Gegenwart von großen Sauerstoffmengen (Luft), Schwefeloxiden und Wasser erreicht.

Zeolithe sind kristalline Alumosilikate, die eine hochgeordnete Struktur mit einem starren dreidimensionalen Netzwerk von $SiO_4$ und $AlO_4$-Tetraedern besitzen, die durch gemeinsame Sauerstoffatome verbunden sind. Das molare Verhältnis der Si- und Al-Atome zu Sauerstoff beträgt 1 : 2 (siehe Ullmanns Encyclopädie der techn. Chemie, 4. Auflage, Band 24, Seite 575 (1983)). Die Elektrovalenz der Aluminium enthaltenden Tetraeder ist durch Einschluß von Kationen in den Kristall, z.B. eines Alkali- oder Wasserstoffions, ausgeglichen. Ein Kationenaustausch ist möglich. Die Räume zwischen den Tetraedern sind vor der Dehydration durch Trocknen bzw. Calcinieren von Wassermolekülen besetzt.

In den Zeolithen können anstelle von Aluminium auch andere Elemente wie B, Ga, Fe, Cr, V, As, Sb, Bi oder Be oder deren Gemische in das Gitter eingebaut oder das Silicium kann durch ein vierwertiges Element wie Ge, Ti, Zr, Hf ersetzt werden, wobei Zeolithe, bei denen das Al durch Fe ersetzt ist, erfindungsgemäß als Katalysatoren für die selektive katalytische Reduktion von $NO_x$ mit Ammoniak eingesetzt werden.

Entsprechend ihrer Struktur werden Zeolithe in verschiedenen Gruppen unterteilt (siehe Ullmanns Encyclopädie der techn. Chemie, 4. Auflage, Band 24, Seite 575 (1983)). So bilden bei der Mordenit-Gruppe Ketten oder bei der Chabasit-Gruppe Schichten aus Tetraedern die Zeolith-Struktur, während sich bei der Faujasit-Gruppe die Tetraeder zu Polyedern ordnen, z.B. in Form eines Kubooktaeders, der aus Vierringen bzw. Sechsringen aufgebaut ist. Je nach Verknüpfung der Kubooktaeder, wodurch unterschiedlich große Hohlräume und Poren entstehen, unterscheidet man Zeolithe vom Typ A, L, X oder Y. In diese Gruppe von Zeolithen gehören auch die sogenannten "ultrastabilen" Zeolithe des Faujasittyps, d.h. dealuminierte Zeolithe. Verfahren zur Herstellung solcher Zeolithe sind beschrieben in "Catalysis by Zeolites" Band 5 aus "Studies in Surface Science and Catalysis" ed. B. Imelik et al. Elsevier Scientific Publishing Comp. 1980, S. 203 und "Crystal Structures of Ultra-stable Faujasites" Advances in Chemistry Series No. 101, American Chemical Society Washington, DC, S. 226 ff (1971) und in US-C 4 512 961.

Zeolithe vom Pentasiltyp haben als Grundbaustein einen aus $SiO_4$-Tetraedern aufgebauten Fünfring gemeinsam. Sie sind durch ein hohes $SiO_2/Al_2O_3$-Verhältnis gekennzeichnet sowie durch Porengrößen, die zwischen denen der Zeolithe vom Typ A und denen vom Typ X oder Y liegen (vgl. Ullmanns Encyclopädie der techn. Chemie, 4. Auflage, Band 24, 1983). Diese Zeolithe können unterschiedliche chemische Zusammensetzung aufweisen. Es handelt sich hierbei um Alumino-, Boro-, Eisen-, Beryllium-, Gallium-, Chrom-, Arsen-, Antimon- und Wismutsilikatzeolithe oder deren Gemische.

Insbesondere eignen sich die Eisensilikatzeolithe des Pentasiltyps für das erfindungsgemäße Verfahren. Der Eisensilikatzeolith wird z.B. aus einer Eisenverbindung, vorzugsweise $Fe(OH)_3$ oder $Fe_2(SO_4)_3$ und einer Siliciumkomponente, vorzugsweise Wasserglas oder hochdispersem Siliciumdioxid in wäßriger Aminlösung, insbesondere in Polyaminen wie 1,6-Hexandiamin- oder 1,3-Propandiamin- oder Triethylentetramin-Lösung mit oder insbesondere ohne Alkali- oder Erdalkalizusatz bei 100 bis 220°C unter autogenem Druck hergestellt. Ein solches Verfahren ist beispielsweise in der EP-C 00 10 572 beschrieben. Auch gehören hierzu die isotaktischen Zeolithe nach DE-A 3 006 471. Auch lassen sich derartige Eisensilikatzeolithe in etherischem Medium wie Diethylenglykoldimethylether, in alkoholischem Medium wie Methanol bzw. 1,4-Butandiol oder in Wasser synthetisieren.

Die so hergestellten Eisensilikatzeolithe können nach ihrer Isolierung, Trocknung bei 100 bis 160°C, vorzugsweise 110 bis 130°C und Calcinierung bei 450 bis 550°C, mit einem Bindemittel im Gewichtsverhältnis 95 : 5 bis 5 : 95 zu Strängen oder Tabletten verformt werden. Als Bindemittel eignen sich diverse Aliuminiumoxide, bevorzugt Boehmit, amorphe Aluminosilikate mit einem $SiO_2/Al_2O_3$-Gewichtsverhältnis von 25 : 75 bis 90 : 5, bevorzugt 70 : 30 bis 80 : 20, Siliciumdioxid, bevorzugt hochdisperses $SiO_2$, Gemische aus hochdispersem $SiO_2$ und hochdispersem $Al_2O_3$, $ZrO_2$, Bentonit sowie Ton. Nach der Verformung werden die Extrudate oder Preßlinge bei 100 bis 120°C 15 bis 20 Stunden lang getrocknet und bei 400 bis 600°C 15 bis 20 Stunden lang calciniert.

Die erfindungsgemäßen Katalysatoren können auch ohne Bindemittel eingesetzt werden. Hierbei wird der Eisensilikatzeolith nach seiner Trocknung zusammen mit Verstrangungs- oder Peptisierungshilfsmitteln z.B. Ethylcellulose, Stearinsäure, Kartoffelstärke, Ameisensäure, Oxalsäure, Essigsäure, Salpetersäure, Ammoniak, Amine, Silikoester und Graphit oder deren Gemischen z.B. zu Tabletten oder Strängen verformt und dann erst calciniert.

Liegt der Zeolith aufgrund der Art seiner Herstellung nicht in der aciden H-Form vor, sondern z.B. in der Na-Form, dann kann diese durch Ionenaustausch, z.B. mit Ammoniumionen und anschließende Calcinierung oder durch Behandlung mit Säuren vollkommen oder partiell in die besonders aktive gewünschte H-Form überführt werden.

Eine Möglichkeit der Modifizierung des Zeolithen besteht darin, daß man das zeolithische Material - verformt oder unverformt - einer Behandlung mit Säuren wie Salzsäure, Flußsäure, Phosphorsäure und/oder Wasserdampf unterwirft. Dabei geht man vorteilhaft z.B. so vor, daß man die Zeolithe in Pulverform mit einer 1 n-Säure, z.B. Phosphorsäure 45 bis 90 Minuten bei 70 bis 90°C behandelt. Nach der Behandlung wird mit Wasser gewaschen, bei 100 bis 120°C 14 bis 18 Stunden getrocknet und bei 450 bis 550°C 15 bis 25 Stunden lang calciniert. Nach einer anderen Arbeitsweise behandelt man Zeolithe vor oder nach ihrer Verformung mit Bindemitteln, z.B. 1 bis 3 Stunden bei Temperaturen von 60 bis 80°C mit einer 3 bis 25gew.%igen, insbesondere 12 bis 20gew.%igen wäßrigen Säure, z.B. Salzsäure. Anschließend wird der so behandelte Zeolith mit Wasser gewaschen, bei Temperaturen von 100 bis 160°C getrocknet und bei 400 bis 500°C calciniert.

Eine besondere Ausführungsform für die Säurebehandlung besteht darin, daß man das zeolithische Material vor seiner Verformung bei erhöhter Temperatur mit Flußsäure, die im allgemeinen als 0,001 n bis 2 n, vorzugsweise 0,05 n bis 0,5 n Flußsäure eingesetzt wird, behandelt, beispielsweise durch Erhitzen unter Rückfluß über einen Zeitraum von im allgemeinen 0,5 bis 5, vorzugsweise 1 bis 3 Stunden. Nach Isolierung, z.B. durch Abfiltrieren und Auswaschen, des zeolithischen Materials wird dieses zweckmäßig, z.B. bei Temperaturen von 100 bis 160°C, getrocknet und bei Temperaturen von im allgemeinen 450 bis 600°C calciniert. Einer HF-Behandlung kann sich auch eine HCl-Behandlung anschließen.

Die erfindungsgemäß einzusetzenden Eisensilikatzeolithe lassen sich auch durch Aufbringen von Phosphorverbindungen, wie Trimethoxiphosphat, Trimethoxiphosphin, primärem, sekundärem oder tertiärem Natriumphosphat modifizieren. Besonders vorteilhaft hat sich die Behandlung mit primärem Natriumphosphat erwiesen. Hierbei werden die Zeolithe in Strang-, Tabletten- oder Monolith-Form mit wäßriger $NaH_2PO_4$-Lösung getränkt, bei 100 bis 120°C getrocknet und bei 450 bis 550°C calciniert.

Um eine möglichst hohe Selektivität, hohe Aktivität sowie lange Standzeiten zu erreichen, kann es vorteilhaft sein, die Eisensilikatzeolithe zu modifizieren. Eine geeignete Modifizierung der Katalysatoren besteht z.B. darin, daß man den unverformten oder verformten Zeolithen mit Metallsalzen durch einen Ionenaustausch oder durch Imprägnierung dotiert. Als Metalle werden ein oder mehrere Übergangsmetalle der Gruppen Ib, IIb, IVb, Vb, VIb, VIIb und VIII des Periodischen Systems der Elemente wie Ti, Zr, V, Nb, Cr, Mo, W, Mn, Fe, Co, Rh, Ni, Pd, Cu, Ag, Zn, Cd und/oder seltene Erdmetalle wie La, Ce, Pr, Nd, Er, Yb und U eingesetzt. Die Modifizierung mit diesen Metallen kann durch Ionenaustausch oder Imprägnierung erfolgen.

Zweckmäßigerweise führt man diese Dotierung so durch, daß man den verformten Zeolithen in einem Steigrohr vorlegt und bei 20 bis 100°C eine wäßrige oder ammoniakalische Lösung eines Halogenids oder eines Nitrats der voranbeschriebenen Metalle überleitet. Ein derartiger Ionenaustausch kann an der Wasserstoff-, Ammonium- und Alkaliform des Zeolithen vorgenommen werden. Eine weitere Möglichkeit der Metallaufbringung auf den Zeolithen ist gegeben, indem man das zeolithische Material, z.B. mit einem Halogenid, einem Nitrat oder einem Oxid der voranbeschriebenen Metalle in wäßriger, alkoholischer oder ammoniakalischer Lösung imprägniert. Sowohl an einen Ionenaustausch als auch an eine Imprägnierung schließt sich zumindest eine Trocknung, wahlweise eine abermalige Calcinierung an. Die gewichtsmäßige Konzentration an Dotierungskomponenten liegt zwischen 0,05 und 10%, insbesondere 0,2 bis 6%.

Im einzelnen kann man so verfahren, daß man ein Salz der oben genannten Metalle, z.B. $Cu(NO_3)_2$ x 3 $H_2O$ oder $Ni(NO_3)_2$ x 6 $H_2O$ oder $Ce(NO_3)_3$ x 6 $H_2O$ oder $Mn(NO_3)_2$ x 4 $H_2O$ oder $Cr(NO_3)_3$ x 9 $H_2O$ in Wasser löst und mit dieser Lösung den verformten oder unverformten Eisensilikatzeolithen eine gewisse Zeit, z.B. 20 bis 40 Minuten, tränkt. Die eventuell überstehende Lösung wird im Rotationsverdampfer von Wasser befreit. Danach wird der getränkte Zeolith bei 140 bis 160°C getrocknet und bei etwa 500 bis 600°C calciniert. Dieser Tränkvorgang kann mehrmals hintereinander vorgenommen werden, um den gewünschten Metallgehalt einzustellen.

Es ist auch möglich, eine wäßrige Salzlösung der genannten Metalle z.B. eine wäßrige $Mn(NO_3)_2$-Lösung oder ammoniakalische $Cu(NO_3)_2$-Lösung herzustellen und darin den reinen pulverförmigen Eisensilikatzeolithen bei 40 bis 100°C unter Rühren etwa 24 h aufzuschlämmen. Nach Abfiltrieren, Trocknen bei 140 bis 160°C und Calcinieren bei etwa 500 bis 600°C kann das so gewonnene zeolithische Material mit oder ohne Bindemittel zu Strängen, Pellets oder Wabenkörpern weiterverarbeitet werden.

Ein Ionenaustausch des in der H-Form oder Ammonium-Form oder Alkali-Form vorliegenden Eisensilikatzeolithen kann so vorgenommen werden, daß man den Zeolithen in Strängen oder Pellets oder Wabenform in einer Kolonne vorlegt und darüber eine wäßrige Lösung der Salze der oben genannten Metalle, z.B. eine wäßrige $Mn(NO_3)_2$-Lösung oder ammoniakalische $Ni(NO_3)_2$-Lösung bei leicht erhöhter Temperatur zwischen 30 und 80°C im Kreislauf 15 bis 20 h leitet. Danach wird mit Wasser ausgewaschen, bei 140 bis 160°C getrocknet und bei 500 bsi 600°C calciniert. Bei manchen metalldotierten Zeolithen, z.B. Pd-, Cu-, Ni-dotierten Zeolithen, kann eine Nachbehandlung mit Wasserstoff vorteilhaft sein.

Die erfindungsgemäß einzusetzenden Katalysatoren können wahlweise als 2- bis 4-mm-Stränge oder als Tabletten mit 3 bis 5 mm Durchmesser oder als Splitt mit Teilchengrößen von 0,1 bis 0,5 mm oder als Wabenkörper eingesetzt werden.

Der Einsatz des Eisensilikatzeolithen für die Reduktion von $NO_x$ mit $NH_3$ erfolgt z.B. bei Kraftwerksanlagen. Hier kann dieser in $DeNO_x$-Anlagen eingebaut werden, die sich im "high dust"-Bereich, im "low dust"-Bereich oder hinter einer Rauchgasentschwefelungsanlage (REA) befinden.

Auch für die Entstickung von Abgasen aus Salpetersäureanlagen, die schwefeloxidfrei sind und ein hohes $NO_2/NO$-Verhältnis aufweisen, läßt sich das erfindungsgemäße Verfahren anwenden. Die erfindungsgemäßen Katalysatoren sind auch weitgehend resistent gegen das in den Rauchgasen, insbesondere in den Rauchgasen von Schmelzkammerfeuerungen enthaltene Arsen.

Beispiele 1 - 33

In den Beispielen verwendeten Katalysatoren sind:

Katalysator A

Ein Eisensilikatzeolith des Pentasil-Typs wurde unter hydrothermalen Bedingungen bei autogenem Druck und 165°C aus 273 g Wasserglas, gelöst in 253 g einer wäßrigen 1,6-Hexandiamin-Lösung (Mischung 50 : 50 Gew.%) und 31 g Eisen-II-sulfat (FeSO$_4$), gelöst in 21 g 96gew.%iger Schwefelsäure und 425 g Wasser in einem Rührautoklaven während 4 Tagen synthetisiert. Der Zeolith wurde abfiltriert, ausgewaschen, bei 110°C/24 h getrocknet und bei 500°C/24 h calciniert. Man erhielt einen Eisensilikatzeolithen mit einem SiO$_2$/Fe$_2$O$_3$-Gewichtsverhältnis von 17,7 und einen Na$_2$O-Gehalt von 1,2 Gew.%. Der Katalysator wurde mit hochdispersem SiO$_2$ im Gewichtsverhältnis 70 : 30 zu 2,5-mm-Strängen verstrangt, bei 110°C/16 h getrocknet und bei 500°C/24 h calciniert. Diese Stränge wurden mit einer 20gew.%igen NH$_4$Cl-Lösung bei 80°C ionenausgetauscht und danach chloridfrei gewaschen, bei 110°C getrocknet und bei 500°C/5 h calciniert. Der Ionenaustausch wird so lange vorgenommen, bis der Na-Gehalt 0,002 Gew.% beträgt.

Katalysator B

Katalysator B entspricht Katalysator A, jedoch wurde der Austausch mit Ammonchlorid-Lösung unterlassen.

Katalysator C

Katalysator C wurde wie Katalysator A hergestellt, jedoch wurde bei der Eisensilikatzeolith-Synthese alkalifrei gearbeitet, d.h. hochdisperses SiO$_2$ statt Wasserglas eingesetzt. Dadurch entfiel auch der Ionenaustausch mit NH$_4$Cl nach der Verformung.

Katalysator D

Katalysator D wurde erhalten, indem man Katalysator A anstelle mit der 20gew.%igen NH$_4$Cl-Lösung mit ammoniakalischer Ce(NO$_3$)$_3$-Lösung bei 50°C ionenausgetauscht, dann bei 110°C/16 h trocknet und bei 500°C/5 h calciniert. Der Ce-Gehalt beträgt 0,2 Gew.% Ce.

Katalysator E

Katalysator E wurde erhalten, indem man Katalysator A mit wäßriger Cr(NO$_3$)$_3$-Lösung imprägniert, bei 80°C/2 h trocknet und bei 540°C/2 h calciniert. Der Cr-Gehalt beträgt 0,2 Gew.%.

Katalysator F

Katalysator F wurde erhalten wie Katalysator E, jedoch wurde Mn(NO$_3$)$_2$ statt Cr(NO$_3$)$_3$ eingesetzt. Der Mn-Gehalt beträgt 0,22 Gew.%.

Katalysator G

Katalysator G wurde erhalten wie Katalysator E, jedoch wurde NH$_4$VO$_3$ statt Cr(NO$_3$)$_3$ eingesetzt. Der V-Gehalt beträgt ca. 0,7 Gew.% V$_2$O$_5$.

Katalysator H (Vergleichskatalysator)

Ein Aluminosilikatzeolith des Pentasil-Typs wurde unter hydrothermalen Bedingungen bei autogenem Druck und 150°C aus 650 g hochdispersem SiO$_2$, 203 g Al$_2$(SO$_4$)$_3$ x 18 H$_2$O in 10 kg einer wäßrigen 1,6-Hexandiamin-Lösung (Mischung 50 : 50 Gew.%) in einem Rührautoklaven hergestellt. Nach Abfiltrieren und Auswaschen wurde das kristalline Reaktionsprodukt bei 110°C/24 h getrocknet und bei 500°C/24 h calciniert. Dieser Aluminosilikatzeolith enthielt 92,8 Gew.% SiO$_2$ und 4,2 Gew.% Al$_2$O$_3$.

Katalysator H wurde erhalten, indem man den reinen Aluminosilikatzeolithen des Pentasiltyps mit Verformungshilfsmitteln zu 2-mm-Strängen verformte, bei 110°C/16 h trocknete und bei 500°C/24 h calcinierte.

Katalysator I (Vergleichskatalysator)

Der Aluminosilikatzeolith ZSM 5 für Katalysator I wurde nach US-C 3 702 886, Beispiel 1, synthetisiert. Dieser ZSM 5-Zeolith wurde mit Boehmit im Gewichtsverhältnis 60 : 40 verformt, bei 110°C getrocknet und bei 500°C/16 h calciniert. Diese Stränge wurden mit 20gew.%iger $NH_4Cl$-Lösung bei 80°C/2 h nach üblicher Methode ionenausgetauscht bis der Na-Gehalt 0,02 Gew.% (nach Trocknung bei 110°C und Calcination bei 500°C/5 h) lag.

Katalysator J (Vergleichskatalysator)

Handelsüblicher Clinoptilolith (Zeolon 400®) wurde gemäß DE-A 30 00 383, Beispiel 1, mit $NH_4NO_3$ und HCl behandelt.

Katalysator K (Vergleichskatalysator)

Handelsüblicher Y-Zeolith wurde gemäß GB-A 2 162 830, Beispiel 3 mit $FeCl_3$ und $NH_4Cl$ behandelt. Dieser Fe-dotierte Y-Zeolith wurde mit hochdispersem $SiO_2$ im Gewichtsverhältnis 70 : 30 verformt, bei 110°C getrocknet und bei 500°C/16 h calciniert. Der $Fe_2O_3$-Gehalt des unverformten Zeolithen betrug 2,54 Gew.%.

Katalysator L (Vergleichskatalysator)

Katalysator L wurde erhalten, indem man den bei Katalysator H synthetisierten, pulvrigen Aluminosilikatzeolithen, wie bei Katalysator K beschrieben, mit Fe dotiert und mit hochdispersem $SiO_2$ verformt.

Katalysator M (Vergleichskatalysator)

Katalysator M wurde erhalten, indem man handelsüblichen Clinoptilolith (Zeolon 400®), wie bei Katalysator K beschrieben, mit Fe dotiert und mit hochdispersem $SiO_2$ verformt. Der $Fe_2O_3$-Gehalt des unverformten Clinoptilolithkatalysators betrug 3,92 Gew.%.

Katalysator N (Vergleichskatalysator)

Katalysator N wurde erhalten indem man handelsübliches Molekularsieb 13X, wie bei Katalysator K beschrieben, mit Fe dotiert und mit hochdispersem $SiO_2$ verformt. Der $Fe_2O_3$-Gehalt des unverformten Zeolithen betrug 3,92 Gew.%.

Katalysator O (Vergleichskatalysator)

Katalysator O wurde erhalten, indem man handelsüblichen Chabazit/Erionit (engporige Zeolithe Zeolon 500®), wie bei Katalysator K beschrieben, mit Fe dotiert und mit hochdispersem $SiO_2$ verformt. Der $Fe_2O_3$-Gehalt des unverformten Zeolithen betrug 6,12 Gew.%.

Katalysator P (Vergleichskatalysator)

Katalysator P wurde erhalten, indem man handelsüblichen Mordenit (Zeolon 900), wie bei Katalysator K beschrieben, mit Fe dotiert und mit hochdispersem $SiO_2$ verformt. Der $Fe_2O_3$-Gehalt des unverformten Zeolithen betrug 1,0 Gew.%.

Katalysator Q (Vergleichskatalysator)

Ultrastabiler NaY-Zeolith ($SiO_2/Al_2O_3$ = 5,1) wurde mit hochdispersem $SiO_2$ im Gewichtsverhältnis 70 : 30 verformt, danach mit 20%iger $NH_4NO_3$-Lösung ionenausgetauscht, bei 110°C getrocknet und bei 500°C/5 h calciniert. Der Ionenaustausch wurde so lange wiederholt, bis der Na-Gehalt bei 0,02 Gew.% lag.

Katalysator R (Vergleichskatalysator)

120 g Mordenit wurden 2 h in 1 N HCl gerührt, abfiltriert, ausgewaschen und bei 120°C getrocknet, anschließend mit Betonit im Gewichtsverhältnis 70 : 30 verstrangt. Es wurde getrocknet und bei 500°C/2 h calciniert.

Katalysator S (Vergleichskatalysator)

Handelsüblicher Mordenit wurde, wie bei DE-B 24 46 006 beschrieben, mit Fe dotiert. Der Fe-Gehalt betrug 8,1 Gew.%.

Katalysator T (Vergleichskatalysator)

Handelsüblicher Zeolith 13X wurde, wie bei DE-B 24 46 006 entsprechend Beispiel 1 beschrieben, mit Fe dotiert. Der Fe-Gehalt betrug 2,2 Gew.%.

Die oben beschriebenen Katalysatoren A bis T wurden mit einem synthetischen Rauchgas der folgenden Zusammensetzung auf ihre Aktivität getestet:

$NO_x$       1 000 Vol ppm
$NH_3$      1 000 Vol ppm
$O_2$       5 Vol %
$H_2O$     10 Vol %
$N_2$       Rest

Falls das synthetische Rauchgas zusätzlich noch $SO_2$ enthielt, ist dies in der folgenden Tabelle angegeben.

Die Temperaturen lagen im Bereich von 280 - 430°C bei Raumgeschwindigkeiten von 31 000 - 93 000 $h^{-1}$.

Die Reaktion wurde unter isothermen Bedingungen in einem Rohrreaktor (U-Form, 0,6 cm Innendurchmesser, 45 cm Länge) mindestens 1 Tag lang durchgeführt. $NO_x$, $NH_3$, $SO_2$, $SO_3$ werden durch übliche Methoden analysiert und quantifiziert.

Die mit diesen Katalysatoren erhaltenen Versuchsergebnisse und -bedingungen sind in der folgenden Tabelle zusammengefaßt.

| Bsp. | Katalysator | $SO_2$ [Vol ppm] | $SV \times 10^{-3}$ $h^{-1}$ | 280°C | 300°C | 330°C | 365°C | 380°C | 430°C |
|---|---|---|---|---|---|---|---|---|---|
| 1 | A | - | 93 | 47 | | 86 | | 96 | 98 |
| 2 | A | 1 000 | 93 | 34 | | 78 | | 94 | 97 |
| 3 | B | - | 93 | 60 | | 88 | | 96 | 98 |
| 4 | B | 1 000 | 93 | 63 | | 93 | | 95 | 100 |
| 5 | C | 1 000 | 93 | 35 | | 80 | | 96 | 99 |
| 6 | D | - | 93 | 60 | | 90 | | 96 | 98 |
| 7 | D | 1 000 | 93 | 46 | | 90 | | 99 | 99 |
| 8 | E | 1 000 | 93 | 37 | | 86 | | 98 | 100 |
| 9 | F | - | 93 | 37 | | 68 | | 89 | 96 |
| 10 | F | 1 000 | 93 | 14 | | 72 | | 96 | 98 |
| 11 | G | - | 93 | 43 | | 80 | | 94 | 98 |
| 12 | G | 1 000 | 93 | 35 | | 65 | | 93 | 98 |
| | | | Vergleichsbeispiele | | | | | | |
| 13 | H | - | 93 | 4 | | 5 | | 10 | 18 |
| 14 | H | 1 000 | 93 | - | | - | | 10 | 20 |
| 15 | I | 1 000 | 93 | - | | - | | 5 | 14 |
| 16 | J | - | 93 | 21 | | 36 | | 54 | 71 |
| 17 | J | 1 000 | 93 | 7 | | 10 | | 15 | 30 |
| 18 | J | - | 31 | | 58 | | 81 | | 93 |
| 19 | K | - | 31 | | 15 | | 41 | | 66 |
| 20 | L | - | 31 | | 15 | | 44 | | 78 |
| 21 | M | - | 31 | | 15 | | 38 | | 67 |
| 22 | N | - | 31 | | 2 | | 4 | | 6 |
| 23 | O | - | 31 | | 69 | | 94 | | 98 |
| 24 | O | - | 93 | 46 | | 75 | | 85 | 88 |
| 25 | O | 1 000 | 93 | 9 | | 21 | | 31 | 65 |
| 26 | P | - | 31 | | 33 | | 88 | | 98 |
| 27 | P | - | 93 | 21 | | 40 | | 65 | 84 |
| 28 | P | 1 000 | 93 | 5 | | 17 | | 46 | 67 |
| 29 | Q | 1 000 | 93 | 6 | | 6 | | 10 | 13 |
| 30 | R | - | 31 | | 6 | | 38 | | 80 |
| 31 | S | - | 31 | | - | | 74 | | 99 |
| 32 | T | - | 31 | | 12 | | 20 | | 33 |

Aus Tabelle 1 ersieht man, daß die Katalysatoren A bis G, bei denen das Eisen in das Gitter des Zeolithen eingebaut ist, für das erfindungsgemäße Verfahren selbst bei sehr hoher SV von 93 000 $h^{-1}$ bessere Ergebnisse liefern als die Vergleichskatalysatoren, bei denen kein Eisen im Gitter eingebaut ist, sondern das Eisen allenfalls auf den Zeolithen aufgebracht ist, die auch bei niedrigerer SV von 31 000 $h^{-1}$ noch schlechtere Ergebnisse liefern.

Beispiel 33

Beispiel 33 beschreibt einen Langzeitversuch, der mit Katalysator A durchgeführt wurde. Die Reaktionsbedingungen waren: $NO_x$ = 1 000 Vol ppm, Volumenverhältnis $NH_3$ : $NO_x$ = 1, SV = 93 000 $h^{-1}$, $SO_2$ = 1 000 Vol ppm, $H_2O$ = 10 Vol.%, $O_2$ = 5 Vol.%, Temperatur: 380°C.

| $NO_x$-Abbau % | 97 | 98 | 98 | 98 | 98 |
|---|---|---|---|---|---|
| Zeit | 120 h | 240 h | 360 h | 480 h | 600 h |

Nach dieser Laufzeit war keine Desaktivierung des Katalysators festzustellen. Während dieses Versuchs wurde keine Bildung von $N_2O$ (Lachgas) festgestellt.

**Patentansprüche**

8

**1.** Verfahren zur Entfernung von Stickoxiden aus Abgasen durch selektive Reduktion mit Ammoniak in Gegenwart von Zeolithen als Katalysatoren, dadurch gekennzeichnet, daß man als Katalysatoren Eisensilikatzeolithe verwendet.

**2.** Verfahren nach Anspruch 1, dadurch gekennzeichnet, daß man als Katalysator einen Eisensilikatzeolithen des Pentasiltyps einsetzt.

**3.** Verfahren nach Ansprüchen 1 bis 2, dadurch gekennzeichnet, daß der Eisensilikatzeolith in der aciden H-Form vorliegt.

**4.** Verfahren nach Ansprüchen 1 bis 2, dadurch gekennzeichnet, daß der Eisensilikatzeolith mit einem oder mehreren Übergangsmetallen der Gruppen Ib, IIb, IVb, Vb, VIb, VIIb und VIII des Periodischen Systems und/oder mit seltenen Erdmetallen dotiert ist.

**Claims**

**1.** A process for removing nitrogen oxides from exhaust gases by selective reduction with ammonia in the presence of a zeolite as catalyst, wherein the catalyst used is an iron silicate zeolite.

**2.** A process as claimed in claim 1, wherein the catalyst used is an iron silicate zeolite of the pentasil type.

**3.** A process as claimed in claim 1 or 2, wherein the iron silicate zeolite is present in the acidic H-form.

**4.** A process as claimed in claim 1 or 2, wherein the iron silicate zeolite has been doped with one or more transition metals of groups Ib, IIb, IVb, Vb, VIb, VIIb and VIII of the periodic table or with a rare earth metal.

**Revendications**

**1.** Procédé pour l'élimination d'oxydes d'azote de gaz de fumée par réduction sélective par l'ammoniac en présence de zéolithes servant de catalyseur, caractérisé en ce qu'on utilise, comme catalyseur, des zéolithes de ferrosilicate.

**2.** Procédé selon la revendication 1, caractérisé en ce qu'on utilise, comme catalyseur, des zéolithes de ferrosilicate du type pentasil.

**3.** Procédé selon la revendication 1 ou 2, caractérisé en ce que la zéolithe de ferrosilicate se présente sous la forme H acide.

**4.** Procédé selon la revendication 1 ou 2, caractérisé en ce que la zéolithe de ferrosilicate est dopée avec un ou plusieurs métaux de transition des groupes Ib, IIb, IVb, VIb, VIIb et VIII du système périodique et/ou avec des métaux des terres rares.